# EUROPÄISCHE PATENTSCHRIFT

(11) **EP 2 122 783 B1**
(45) Veröffentlichungstag und Bekanntmachung des Hinweises auf die Patenterteilung: **29.06.2016**
(21) Anmeldenummer: 07857279.9
(22) Anmeldetag: 06.12.2007
(51) Int. Cl.: H01R 13/66

(54) **SENSORMODUL MIT EINER STECKVERBINDERKUPPLUNG**
SENSOR MODULE WITH A PLUG-TYPE CONNECTOR COUPLING
MODULE DE DÉTECTION ÉQUIPÉ D'UN COUPLEUR DE CONNEXION ENFICHABLE

(30) Priorität: 22.12.2006 DE 102006062184
(43) Veröffentlichungstag der Anmeldung: 25.11.2009
(73) Patentinhaber: Endress + Hauser Conducta GmbH+Co. KG, 70839 Gerlingen (DE)
(72) Erfinder: BABEL, Wolfgang, 71263 Weil der Stadt (DE); PECHSTEIN, Torsten, 01445 Radebeul (DE); WITTMER, Detlev, 75433 Maulbronn (DE)
(74) Vertreter: Andres, Angelika Maria
(86) Internationale Anmeldenummer: PCT/EP2007/063462
(87) Internationale Veröffentlichungsnummer: WO 2008/077737

(56) Entgegenhaltungen:
- EP-A- 0 299 863
- WO-A-03/096139
- WO-A-2005/031339
- DE-A1- 4 033 052
- DE-A1- 10 348 569
- DE-C1- 19 610 167
- DE-C1- 19 719 730
- DE-U1- 8 814 743

## Beschreibung

Die Erfindung betrifft eine Steckverbinderkupplung für ein Sensormodul bzw. einen Sensor, insbesondere eine Steckverbinderkupplung mit einer galvanisch getrennten Schnittstelle für Energie und Daten und ein Sensormodul mit einer solchen Steckverbinderkupplung.

Derartige Steckverbinderkupplungen umfassen ein primärseitiges Steckverbinderelement und ein sekundärseitiges Steckverbinderelement, wobei das sekundärseitige Steckverbinderelement sensorseitig angeordnet ist, das primärseitige Steckverbinderelement einer übergeordneten Einheit zum Betreiben des Sensors zugeordnet ist, und das primärseitige Steckverbinderelement mit dem sekundärseitigen Steckverbinderelement lösbar gekoppelt werden kann, um den Sensor an die übergeordnete Einheit anzuschließen.

Derartige Steckverbinderkupplungen sind beispielsweise in dem Patent DE 197 19 730 C1, und den Offenlegungsschriften DE 100 55 090 A1 bzw. DE102 18 606 A1 offenbart. Sensoren mit gattungsgemäßen Steckverbinderkupplungen werden von der Anmelderin unter der Marke Memosens^{®} vertrieben.

### Beschreibung

Die EP 0299863 offenbart eine Vorrichtung zur Übermittlung von Energie und Daten zwischen der Oberfläche und einem Gerät in einem Bohrloch mittel elektromagnetischer Verbindungsmittel. Dies wird erreicht mit einer ersten (inneren) und einer zweiten (äußeren) Induktionsspule, wobei die erste Spule von einer von der zweiten Spule getrennten Position zu einer Betriebsposition bewegt werden kann, in der die Spulen koaxial zueinander angeordnet sind um die Geräte an der Oberfläche mit Geräten im Bohrloch zu verbinden. Die Spulen befinden sich auf einem inneren bzw. äußeren Kern aus Ferritmaterialien damit radiale und longitudinale Abweichungen aus der idealen Anordnung der Spulen zueinander den Transport von elektrischer Energie nicht unzulässig beeinflussen.

Die galvanisch getrennte Schnittstelle umfasst gewöhnlich eine induktive Schnittstelle zum Speisen des Sensors mittels eines Energiesignals, insbesondere eines AC-Signals. Die Übertragung von Daten, also Messdaten bzw. Konfigurier- und Parametrierdaten, kann beispielsweise über die gleiche induktive Schnittstelle durch Modulation des Energiesignals erfolgen.

Die Steckverbinderkupplungen nach dem Stand der Technik und die damit ausgestatteten Sensormodule weisen jedoch das folgende Problem auf. Es kann zu Situationen kommen, bei denen das primärseitige Steckverbinderelement nicht zur Versorgung des sekundärseitigen Steckverbinderelements und damit des Sensors zur Verfügung steht.

Dies ist beispielsweise dann der Fall, wenn das primärseitige Steckverbinderelement vom sekundärseitigen Steckverbinderelement abgezogen wird, um mittels eines Simulators Testsignale in die Schnittstelle des primärseitigen Steckverbinderelements einzuspeisen, um die Signalübertragung vom primärseitigen Steckverbinderelement zur übergeordneten Einheit zu überprüfen, oder um die Antwort einer Anlage auf einen bestimmten Messwertverlauf zu testen. Derartige Simulatoren sind beispielsweise in der noch unveröffentlichten deutschen Patentanmeldung "Sensorsimulator" mit dem Aktenzeichen 102005041427 offenbart.

Weiterhin kann ein Ausfall der primärseitigen Steckverbinderkupplung oder der übergeordneten Einheit zu einer Unterbrechung der Energieversorgung des sekundärseitigen Steckverbinderelements und des damit verbundenen Sensors führen.

Dies bedingt einerseits den Verlust an Messdaten von der Messstelle des Sensors für die Zeit der Versorgungsunterbrechung, andererseits wird ein Neustart des Sensors erforderlich, wenn die Versorgung des Sensors nach einer Unterbrechung wieder aufgenommen wird. Zudem werden bei einer Unterbrechung der Energieversorgung bei einigen Sensortypen Sensorfunktionen gestört, die eine dauerhafte Energieversorgung benötigen, hierzu gehört beispielsweise die Aufrechterhaltung der Polarisationsspannung bei amperometrischen Sensoren.

Es ist daher die Aufgabe der vorliegenden Erfindung, ein sekundärseitiges Steckverbinderelement einer Steckverbinderkuplung für einen Sensor und ein Sensormodul mit einem solchen sekundärseitigen Steckverbinderelement bereitzustellen, welches die Nachteile des Stands der Technik überwindet.

Die Aufgabe wird erfindungsgemäß gelöst durch das sekundärseitige Steckverbinderelement gemäß des unabhängigen Patentanspruchs 1 und das Sensormodul gemäß des unabhängigen Patentanspruchs 20.

Eine Steckverbinderkupplung zum Anschluss eines Sensors an eine übergeordnete Einheit zum Betreiben des Sensors umfasst ein primärseitiges Steckverbinderelement und das erfindungsgemäße sekundärseitige Steckverbinderelement, wobei
das sekundärseitige Steckverbinderelement sensorseitig angeordnet ist,
das primärseitige Steckverbinderelement der übergeordneten Einheit zugeordnet ist,
die Steckverbinderkupplung eine galvanisch getrennte Schnittstelle zwischen dem primärseitigen Steckverbinderelement und dem sekundärseitigen Steckverbinderelement aufweist, über welche das sekundärseitige Steckverbinderelement mit einem Energieversorgungssignal versorgbar ist, und über welche ein Datenaustausch zwischen den beiden Steckverbinderelementen erfolgen kann,
das sekundärseitige Steckverbinderelement
eine Energieversorgungseinheit umfasst, welche aus dem Energieversorgungssignal die erforderlichen Versorgungsspannungen für Komponenten des sekundärseitigen Steckverbinderelements und ggf. für den Sensor generiert,
einen A/D-Wandler zur Wandlung eines analogen Messsignals des Sensors,
einen Datenspeicher zur Speicherung von Sensordaten, und
einen Mikroprozessor zur Steuerung der Kommunikation zwischen dem sekundärseitigen Steckverbinderelement und dem primärseitigen Steckverbinderelement und/oder zur Aufbereitung des digitalisierten Sensorsignals aufweist,
wobei ferner
die Energieversorgungseinheit einen Energiespeicher aufweist, um während einer Unterbrechung des Energieversorgungssignals die Energieversorgung zumindest für ausgewählte Komponenten des sekundärseitigen Steckverbinderelements und ggf. des Sensors für eine begrenzte Zeit zu gewährleisten.

Der Energiespeicher ist vorzugsweise ein während des Betriebs der Steckverbinderkupplung ladbarer Energiespeicher, er kann beispielsweise einen Kondensator umfassen, insbesondere einen so genannten Gold-Cap, oder einen Akkumulator. Die Energieversorgungseinheit kann hierzu eine geeignete Ladeschaltung umfassen.

Die Energieversorgungseinheit umfasst in einer Ausgestaltung Strombegrenzer bzw. Spannungsbegrenzer für die von dem Energiespeicher abgegebene elektrische Leistung, um die Eigensicherheit im Sinne der Zündschutzart Ex-i der Steckverbinderkupplung zu gewährleisten.

Der Energiespeicher kann beispielsweise so dimensioniert sein, dass der Betrieb des sekundärseitigen Steckverbinderelements und ggf. des Sensorelements mindestens 10 Minuten, vorzugsweise mindestens eine Stunde, weiter bevorzugt mindestens 4 Stunden aufrechterhält.

In einer Weiterbildung der Erfindung kann ein Zeitintervall vorgegeben oder vorgebbar sein, sein für das der Betrieb aufrechterhalten werden soll.

In einer Ausgestaltung dieser Weiterbildung der Erfindung ermittelt der Mikroprozessor anhand des Zeitintervalls und ggf. des Ladezustands des Energiespeichers, den Umfang von Funktionen, die über das Zeitintervall aufrechterhalten werden können. Hierzu können die Funktionen der Komponenten der sekundärseitigen Steckverbinderkupplung nach Ihrer Bedeutung für den Betrieb der sekundärseitigen Steckverbinderkupplung und ggf. des Sensors priorisiert sein.

Eine der aufrechtzuerhaltenden Funktionen des sekundärseitigen Steckverbinderelements und des Sensors ist beispielsweise die Messwerterfassung, wobei die erfassten Messwerte zunächst nicht übertragen sondern zwischengespeichert werden.

Erst nach Wiederherstellung der Energieversorgung über das Energieversorgungssignal erfolgt die Übertragung der zwischengespeicherten Messwerte über die Schnittstelle an die übergeordnete Einheit.

In Abhängigkeit der verfügbaren Energie und der Länge des vorgegebenen Zeitintervalls kann der Mikroprozessor ermitteln, mit welcher Rate Messwerte ermittelt und gespeichert werden können.

Gleichermaßen können zunächst nur digitalisierte Rohdaten des Sensorsignals, die ggf. zeitlich gemittelt sind ohne weitere Aufbereitung zwischengespeichert werden, um den Energiebedarf zu begrenzen.

Nach Wiederherstellung der Energieversorgung durch das Energieversorgungssignal des primärseitigen Steckverbinderelements können die digitalisieren Rohdaten verarbeitet und anschließend zur übergeordneten Einheit übertragen werden.

Den Messwerten ist jeweils der Zeitpunkt der Messung zugeordnet, wobei der Zeit explizit gespeichert sein kann, oder sich aus der Position eines Messwerts in der Sequenz der gespeicherten Messwerte ergibt.

In einer Weiterbildung der Erfindung kann der Energiespeicher dazu dienen, essentielle Sensorfunktionen aufrechtzuerhalten, beispielsweise die Polarisationsspannung eines amperometrischen Sensors.

Die Priorisierung der einzelnen Funktionen der Komponenten des sekundärseitigen Steckverbinderelements kann vorgegeben und ggf. vom Benutzer veränderlich sein.

Sofern die Unterbrechung des Energieversorgungssignals durch einen kontrollierten Eingriff in die Messstelle erfolgt, und die Dauer der Unterbrechung abschätzbar ist, beispielsweise im Zusammenhang mit einer Wartungsmaßnahme an der übergeordneten Einheit oder an dem primärseitigen Steckverbinderelement, kann dem sekundärseitigen Steckverbinderelement entweder explizit die geschätzte Zeitdauer für eine bevorstehende Unterbrechung signalisiert werden, oder es kann die Art der Maßnahme beispielsweise über einen Index mitgeteilt werden, woraus sich für das sekundärseitige Steckverbinderelement von anhand von gespeicherten Daten, die zu erwartende Dauer der Unterbrechung ergibt.

Die übergeordnete Einheit kann insbesondere ein Messumformer oder ein Feldbus sein, der mit einer digitalen Steuerungseinrichtung verbunden ist.

Die galvanisch getrennte Schnittstelle umfasst gewöhnlich eine induktive Schnittstelle zur Speisung des Sensors mittels eines Energiesignals beispielsweise eines AC-Signals. Die Übertragung von Daten, also Messdaten bzw. Konfigurier- und Parametrierdaten, kann beispielsweise durch Modulation des Energiesignals erfolgen, wobei die Übertragung von Daten vom sekundärseitigen Steckverbinderelement zum primärseitigen Steckverbinderelement durch Lastmodulation des Energiesignals erfolgen kann.

Zur Trennung von Daten und Energie sind entsprechende Demodulatoren bzw. Filter vorgesehen. Einzelheiten hierzu sind beispielsweise in dem Patent DE 197 19 730 C1 offenbart.

In einer Weiterbildung der Erfindung erfolgt die Übertragung von Daten vom sekundärseitigen Steckverbinderelement zum primärseitigen Steckverbinderelement, indem das Energieversorgungssignal von der Primärseite unterbrochen wird, und von dem sekundärseitigen Steckverbinderelement Daten aktiv übertragen werden, beispielsweise durch Modulation eines vom sekundärseitigen Steckverbinderelement gesendeten AC-Trägersignals. Die Energie hierzu wird von dem Energiespeicher bereitgestellt.

Das erfindungsgemäße Sensormodul umfasst ein erfindungsgemäßes sekundärseitiges Steckverbinderelement einer Steckverbinderkupplung, und einen Sensor der für einen Anwender unlösbar mit dem sekundärseitigen Steckverbinderelement verbunden ist, wobei das sekundärseitige Steckverbinderelement in seinem Datenspeicher sensorspezifische Daten enthält, und zum Betreiben des Sensors vorgesehen ist.

Der Sensor kann beispielsweise ein Analysesensor der industriellen Prozessmesstechnik sein, insbesondere ein potentiometrischer Sensor, ein amperometrischer Sensor, ein photometrischer Sensor, ein spektrometrischer Sensor, oder ein Leitfähigkeitssensor.

Die potentiometrischen Sensoren umfassen insbesondere pH-Sensoren oder Sensoren zur Bestimmung von Redox-Potentialen.

Die Erfindung wird nun anhand eines in der Zeichnung dargestellten Ausführungsbeispiels erläutert.

Es zeigt:

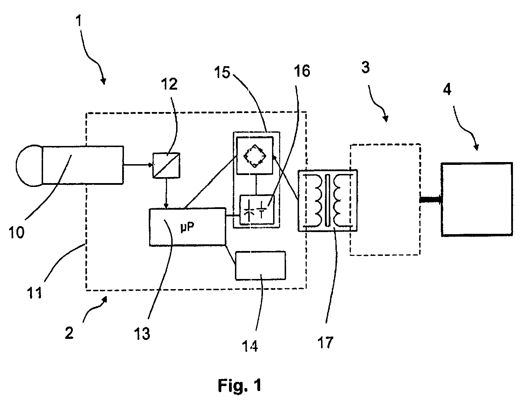

Fig. 1: ein schematisches Blockschaltbild eines erfindungsgemäßen Sensormoduls.

Das in Fig. 1 dargestellte Sensormodul 1 umfasst ein sekundärseitiges Steckverbinderelement 2 und einen pH-Sensor 10, welcher unlösbar und dicht gegen Verschmutzungen mit einem Gehäuse 11 des sekundärseitigen Steckverbinderelements verbunden ist. Das Gehäuse 11 hat insbesondere die Gestalt eines Steckkopfes, der an einem axialen Endabschnitt eines im wesentlichen zylinderförmigen Sensors angeordnet ist, und der den Sensor in radialer Richtung um nicht mehr als den einfachen Zylinderradiusradius überragt.

Das sekundärseitige Steckverbinderelement 2 umfasst in seinem Gehäuse 11 eine elektronische Schaltung zur Verarbeitung der Messsignale des pH-Sensors 10. Die Schaltung umfasst einen A/D-Wandler 12, welcher die Analogsignale des pH-Sensors digitalisiert und einem Mikroprozessor 13 zur weiteren Verarbeitung zuführt. Die vom Mikroprozessor aufbereiteten Messdaten werden im normalen Betrieb an eine primärseitiges Steckverbinderelement 3 übermittelt, beispielsweise durch Lastmodulation eines AC-Trägersignals, welches vom primärseitigen Steckverbinderelement 3 zum sekundärseitigen Steckverbinderelement 2 über eine induktive Schnittstelle 17 übertragen wird. Von dort werden die Daten an eine übergeordnete Einheit 4 weitergeleitet, beispielsweise an einen Messumformer. Als physikalisches Format der Kommunikation zwischen dem primärseitigen Steckverbinderelement 3 und der übergeordneten Einheit 4 ist u.a. RS485 geeignet. Zur Trennung von Daten und Trägersignal sind im primärseitigen Steckverbinderelement 3 geeignete Demodulatoren vorgesehen. Entsprechend weist das primärseitige Steckverbinderelement Modulatoren auf, um Steuersignale über die Schnittstelle zum Sensormodul, genauer zum sekundärseitigen Steckverbinderelement 2 zu übertragen, wo ein entsprechender Demodulator vorgesehen ist.

Das sekundärseitige Steckverbinderelement 2 umfasst weiterhin einen Datenspeicher, in dem einerseits sensorspezifische Daten, insbesondere Sensoridentität, Kalibrierdaten und Parametrierdaten abgelegt sind, und andererseits Messdaten gespeichert werden können.

Der Mikroprozessor 13 wird über eine Energieversorgungseinheit 15 gespeist. Die Energieversorgungseinheit umfasst u.a. eine Gleichrichterschaltung, die das AC-Trägersignal gleichrichtet, um die Versorgungsspannungen für die elektronische Schaltung des sekundären Steckverbinderelements bereitzustellen. Die Energieversorungseinheit 15 umfasst weiterhin einen Energiespeicher 16, mit einer Batterie und/oder einem Gold-Cap Kondensator, wobei der Energiespeicher 16 im normalen Betrieb des Sensormoduls im geladenen Zustand gehalten wird.

Bei Ausfall des AC-Trägersignals erfolgt die Energieversorgung der Komponenten der elektronischen Schaltung durch den Energiespeicher. Der Mikroprozessur 13 ermittelt anhand der verfügbaren Energie und einer vorgegebenen Dauer ohne AC-Trägersignal die Rate mit der Messdaten in gleichmäßigen Abständen über die vorgegebene Dauer ermittelt werden können. Die ermittelten Messdaten werden im Speicher 14 hinterlegt und erst nach erneutem Auftreten des AC-Trägersignals aus dem Speicher ausgelesen und zum primärseitigen Steckverbinderelement übertragen.

## Patentansprüche

1. Sensormodul (1) mit einem sekundärseitigen Steckverbinderelement (2) einer Steckverbinderkupplung und einem Sensor (10) zum Anschluss an eine übergeordnete Einheit (4) zum Betreiben des Sensors, wobei die Steckverbinderkupplung ein primärseitiges Steckverbinderelement (3) und das sekundärseitige Steckverbinderelement (2) aufweist, das sekundärseltige Steckverbinderelement (2) sensorseitig angeordnet ist, das primärseitige Steckverbinderelement (3) der übergeordneten Einheit (4) zugeordnet ist, die Steckverbinderkupplung eine galvanisch getrennte Schnittstelle (17) zwischen dem primärseitigen Steckverbinderelement (3) und dem sekundärseitigen Steckverbinderelement (2) aufweist, über welche das sekundärseitige Steckverbinderelement (2) mit einem Energieversorgungssignal versorgbar ist, und über welche ein Datenaustausch zwischen den beiden Steckverbinderelementen (2, 3) erfolgen kann, wobei
das sekundärseitige Steckverbinderelement (2)
eine Energieversorgungseinheit (15), welche aus dem Energieversorgungssignal die erforderlichen Versorgungsspannungen für Komponenten des sekundärseitigen Steckverbinderelements (2) und für den Sensor (10) generiert,
inen A/D-Wandler (12) zur Wandlung eines analogen Messsignals des Sensors (10), einen Datenspeicher (14) zur Speicherung von Sensordaten, und
einen Mikroprozessor (13) zur Steuerung der Kommunikation zwischen dem sekundärseitigen Steckverbinderelement (2) und dem primärseitigen Steckverbinderelement (3) und/oder zur Aufbereitung des digitalisierten Sensorsignals aufweist,
wobei die Energieversorgungseinheit (15) ferner einen Energiespeicher (16) aufweist, um während einer Unterbrechung des Energieversorgungssignals die Energieversorgung zumindest für ausgewählte Komponenten des sekundärseitigen Steckverbinderelements (2) und des Sensors (10) für eine begrenzte Zeit zu gewährleisten,
**dadurch gekennzeichnet, dass**
der Sensor (10) als pH-Sensor ausgestaltet ist, welcher unlösbar und dicht gegen Verschmutzungen mit einem Gehäuse (11) des sekundärseitigen Steckverbinderelements (2) verbunden ist

2. Sensormodul (1) nach Anspruch 1, wobei
wobei der Energiespeicher (16) ein während des Betriebs der
Steckverbinderkupplung Iadbarer Energiespeicher ist.

3. Sensormodul (1) nach Anspruch 1 oder 2, wobei der Energiespeicher einen Kondensator, insbesondere einen Gold-Cap, oder einen Akkumulator umfasst.

4. Sensormodul (1) nach einem der vorhergehenden Ansprüche, wobei die Energieversorgungseinheit Strombegrenzer bzw. Spannungsbegrenzer für die von dem Energiespeicher abgegebene elektrische Leistung aufweist.

5. Sensormodul (1) nach einem dervorhergehenden Ansprüche, wobei der Energiespeicher so dimensioniert ist, dass er den Betrieb des sekundärseitigen Steckverbinderelements und des Sensors mindestens 10 Minuten, vorzugsweise mindestens eine Stunde, weiter bevorzugt mindestens 4 Stunden nach einer Unterbrechung aufrecht erhält.

6. Sensormodul (1) nach einem der vorhergehenden Ansprüche, wobei ein Zeitintervall vorgegeben oder vorgebbar ist, für den der Betrieb aufrechterhalten werden soll.

7. Sensormodul (1) nach Anspruch 6, wobei der Mikroprozessor anhand des Zeitintervalls und des Ladezustands des Energiespeichers, den Umfang von Funktionen ermittelt, die über das Zeitintervall aufrechterhalten werden können, wobei die Funktionen der Komponenten der sekundärseitigen Steckverbinderkupplung nach ihrer Bedeutung für den Betrieb der sekundärseitigen Steckverbinderkupplung und des Sensors priorisiert sind.

8. Sensormodul (1) nach einem der vorhergehenden Ansprüche, wobei die Messwerterfassung, während der Unterbrechung des Energieversorgungssignals aufrechterhalten wird, und die erfassten Messwerte zunächst nicht übertragen sondern in dem Datenspeicher zwischengespeichert werden, wobei nach Wiederherstellung der Energieversorgung über das Energieversorgungssignal die Übertragung der zwischengespeicherten Messwerte über die Schnittstelle an die übergeordnete Einheit erfolgt.

9. Sensormodul (1) nach Anspruch 7 oder 8, wobei in Abhängigkeit der verfügbaren Energie und der Länge des vorgegebenen Zeitintervalls der Mikroprozessor ermittelt, mit welcher Rate Messwerte ermittelt und zwischengespeichert werden können.

10. Sensormodul (1) nach einem der Ansprüche 8 oder 9, wobei zunächst nur digitalisierte Rohdaten des Sensorsignals, gespeichert werden, um den Energiebedarf zu begrenzen.

11. Sensormodul (1) nach einem der vorhergehenden Ansprüche, wobei, sofern die Unterbrechung des Energieversorgungssignals durch einen kontrollierten Eingriff in die Messstelle erfolgt, und die Dauer der Unterbrechung abschätzbar ist, dem sekundärseitigen Steckverbinderelement, entweder explizit die geschätzte Zeitdauer für eine bevorstehende Unterbrechung signalisiert wird, oder die Art der Maßnahme beispielsweise über einen Index mitgeteilt wird, woraus sich für das sekundärseitige Steckverbinderelement anhand von gespeicherten Daten, die zu erwartende Dauer der Unterbrechung ergibt.

12. Sensormodul (1) nach einem der vorhergehenden Ansprüche, wobei die galvanisch getrennte Schnittstelle eine induktive Schnittstelle zur Speisung des sekundärseitigen Steckverbinderelements mittels eines Energiesignals umfasst, und wobei die Übertragung von Daten durch Modulation des Energiesignals erfolgt.

13. Sensormodul (1) nach einem der vorhergehenden Ansprüche, wobei die Übertragung von Daten vom sekundärseitigen Steckverbinderelement zum primärseitigen Steckverbinderelement erfolgt, indem das Energieversorgungssignal von der Primärseite unterbrochen wird, und von dem sekundärseitigen Steckverbinderelement Daten aktiv übertragen werden.

14. Sensormodul (1) nach einem der vorhergehenden Ansprüche, wobei das sekundärseitige Steckverbinderelement in seinem Datenspeicher sensorspezifische Daten enthält.

## Claims

1. Sensor module (1) with a secondary connector element (2) of a connector coupling and a sensor (10) for connection to a higher-order unit (4) designed to operate the sensor, wherein the connector coupling has a primary connector element (3) and the secondary connector element (2), said secondary connector element (2) being arranged on the sensor side, said primary connector element (3) being assigned to the higher-order unit (4), the connector coupling having a galvanically isolated interface (17) between the primary connector element (3) and the secondary connector element (2), via which an energy supply signal can be supplied to the secondary connector element (2), and via which data can be exchanged between the two connector elements (2, 3), wherein
the secondary connector element (2) has
an energy supply unit (15), which generates the necessary supply voltages for the components of the secondary connector element (2) and for the sensor (10) from the energy supply signal,
an A/D converter (12) for converting an analog measuring signal of the sensor (10), a data memory (14) for storing sensor data, and
a microprocessor (13) for controlling the communication between the secondary connector element (2) and the primary connector element (3) and/or for conditioning the digitized sensor signal,
wherein the energy supply unit (15) further has an energy storage unit (16) to guarantee the supply of energy for a limited time at least for selected components of the secondary connector element (2) and of the sensor (10) should the energy supply signal be interrupted,
**characterized in that**
the sensor (10) is designed as a pH sensor which is connected to the housing (11) of the secondary connector element (2) in a non-detachable manner and a manner sealed against impurities.

2. Sensor module (1) as claimed in Claim 1, wherein the energy storage unit (16) is an energy storage unit which can be charged while the connector coupling system is in operation.

3. Sensor module (1) as claimed in Claim 1 or 2, wherein the energy storage unit is a capacitor, particularly a Gold Cap capacitor, or a storage battery.

4. Sensor module (1) as claimed in one of the previous claims, wherein the energy storage unit has current limiters or voltage limiters for the electrical power given by the energy storage unit.

5. Sensor module (1) as claimed in one of the previous claims, wherein the energy storage unit is sized in such a way that it maintains the operation of the secondary connector element and the sensor for at least 10 minutes, preferably for at least one hour and most preferably for at least 4 hours following an interruption to the energy supply.

6. Sensor module (1) as claimed in one of the previous claims, wherein a time interval is pre-defined or predefinable for which operation should be maintained following an interruption to the energy supply.

7. Sensor module (1) as claimed in Claim 6, wherein, on the basis of the time interval and the charging state of the energy storage unit, the microprocessor determines the range of functions that can be maintained over the time interval, wherein the functions of the components of the secondary connector coupling are prioritized according to their importance for the operation of the secondary connector coupling.

8. Sensor module (1) as claimed in one of the previous claims, wherein measured value acquisition is maintained while the energy supply signal is interrupted, and the recorded measured values are initially not transmitted and are instead buffered in the data memory, wherein, once the energy supply is restored via the energy supply signal, the buffered measured values are transmitted via the interface to the higher-order unit.

9. Sensor module (1) as claimed in Claim 7 or 8, wherein, depending on the energy available and the length of the predefined interval, the microprocessor determines the frequency at which measured values can be determined and buffered.

10. sensor module (1) as claimed in Claims 8 or 9, wherein initially only digitized raw data of the sensor signal are saved in order to limit the energy demand.

11. Sensor module (1) as claimed in one of the previous claim, wherein if the interruption in the energy supply signal is caused by a controlled intervention at the measuring point and the duration of the interruption can be estimated, either the estimated duration of the pending interruption is explicitly signaled to the secondary connector element, or the type of measure is communicated to the secondary connector element, for example, via an index, resulting, on the basis of saved data, in the duration of the interruption for the secondary connector element.

12. Sensor module (1) as claimed in one of the previous claims, wherein the galvanically isolated interface comprises an inductive interface to supply the secondary connector element with an energy signal, and wherein the transmission of data is performed by modulation of the energy signal.

13. Sensor module (1) as claimed in one of the previous claims, wherein data are transmitted from the secondary connector element to the primary connector element by interrupting the energy supply signal on the primary side and by actively transmitting data from the secondary connector element.

14. Sensor module (1) as claimed in one of the previous claims, wherein the secondary connector element has sensor-specific data in its data memory.

## Revendications

1. Module capteur (1) avec un élément de connexion côté secondaire (2) d'un système de couplage et un capteur (10) destiné au raccordement au raccordement à une unité maître (4) destinée à l'exploitation du capteur, le système de couplage présentant un élément de connexion primaire (3) et un élément de connexion secondaire (2), l'élément de connexion secondaire (2) étant disposé côté capteur, l'élément de connexion primaire (3) étant affecté à l'unité maître (4), le système de couplage présentant une interface (17) séparée galvaniquement entre l'élément de connexion côté primaire (3) et l'élément de connexion côté secondaire (2), par l'intermédiaire de laquelle l'élément de connexion côté secondaire (2) peut être alimentée par un signal d'alimentation en énergie, et par l'intermédiaire de laquelle peut intervenir un échange de données entre les deux éléments de connexion (2, 3), pour lequel
l'élément de connexion côté secondaire (2) comporte
une unité d'alimentation en énergie (15), laquelle génère à partir du signal d'alimentation en énergie les tensions d'alimentation requises pour les composants de l'élément de connexion côté secondaire (2) et pour le capteur (10),
un convertisseur A/N destiné à la conversion d'un signal de mesure analogique du capteur (10),
une mémoire de données (14) destinée à la mémorisation des données du capteur, et
un microprocesseur (13) destiné au contrôle de la communication entre l'élément de connexion côté secondaire (2) et l'élément de connexion côté primaire (3) et/ou destiné au traitement du signal numérisé du capteur,
pour lequel l'unité d'alimentation en énergie (15) comprend en outre un accumulateur d'énergie (16), afin de garantir pendant un temps limité, lors d'une interruption du signal d'alimentation en énergie, l'alimentation en énergie au moins pour les composants sélectionnés de l'élément de connexion côté secondaire (2) et du capteur (10),
**caractérisé en ce que**
le capteur (10) est conçu en tant que capteur pH, lequel est relié de façon inamovible et étanche aux impuretés avec un boîtier (11) de l'élément de connexion côté secondaire (2).

2. Module capteur (1) selon la revendication 1, pour lequel l'accumulateur d'énergie (16) est un accumulateur d'énergie pouvant être chargé pendant le fonctionnement du système de couplage.

3. Module capteur (1) selon la revendication 1 ou 2, pour lequel l'accumulateur d'énergie comprend un condensateur, notamment un condensateur Gold Cap, ou un accumulateur.

4. Module capteur (1) selon l'une des revendications précédentes, pour lequel l'unité d'alimentation en énergie comporte un limiteur de courant ou un limiteur de tension pour la puissance électrique fournie par l'accumulateur d'énergie.

5. Module capteur (1) selon l'une des revendications précédentes, pour lequel l'accumulateur d'énergie est dimensionné de telle sorte à maintenir le fonctionnement de l'élément de connexion côté secondaire et du capteur pendant au moins 10 minutes, de préférence pendant au moins une heure et particulièrement de préférence pendant au moins 4 heures.

6. Module capteur (1) selon l'une des revendications précédentes, pour lequel un intervalle de temps est prédéfini ou prédéfinissable, pendant lequel le fonctionnement doit être maintenu.

7. Module capteur (1) selon la revendication 6, pour lequel le microprocesseur détermine, sur la base de l'intervalle de temps et de l'état de charge de l'accumulateur d'énergie, l'étendue des fonctions pouvant être maintenues pendant l'intervalle de temps, les fonctions des composants du système de couplage côté secondaire étant prioritisées selon leur importance pour le fonctionnement du système de couplage côté secondaire et du capteur.

8. Module capteur (1) selon l'une des revendications précédentes, pour lequel l'acquisition des valeurs mesurées est maintenue pendant l'interruption du signal d'alimentation en énergie, et les valeurs mesurées acquises ne sont dans un premier temps pas transmises, mais font l'objet d'un stockage intermédiaire dans la mémoire de données, la transmission vers l'unité maître des valeurs mesurées stockées en mémoire intermédiaire étant réalisée via l'interface après le rétablissement de l'alimentation en énergie, par le biais du signal d'alimentation en énergie.

9. Module capteur (1) selon la revendication 7 ou 8, pour lequel le microprocesseur détermine, en fonction de l'énergie disponible et de la longueur de l'intervalle de temps prédéfinissable, la fréquence à laquelle les valeurs mesurées peuvent être déterminées et stockées en mémoire intermédiaire.

10. Module capteur (1) selon la revendication 8 ou 9, pour lequel ne sont mémorisées dans un premier temps que des données brutes numérisées du signal du capteur, afin de limiter la consommation d'énergie.

11. Module capteur (1) selon l'une des revendications précédentes, pour lequel, dans la mesure où l'interruption du signal d'alimentation en énergie intervient par une intervention contrôlée dans le point de mesure, et dans la mesure où la durée de l'interruption peut être estimée, soit la durée estimée pour une interruption imminente est signalée de façon explicite à l'élément de connexion côté secondaire, soit la nature de la mesure est communiquée, par exemple au moyen d'un index, d'où il découle, pour l'élément de connexion côté secondaire la durée de l'interruption à attendre au moyen de données mémorisées.

12. Module capteur (1) selon l'une des revendications précédentes, pour lequel l'interface isolée galvaniquement comprend une interface inductive destinée à alimenter l'élément de connexion côté secondaire au moyen d'un signal d'énergie, et pour lequel la transmission de données est réalisée par modulation du signal d'énergie.

13. Module capteur (1) selon l'une des revendications précédentes, pour lequel la transmission de données depuis l'élément de connexion côté secondaire vers l'élément de connexion côté primaire intervient en ce que le signal d'alimentation en énergie du côté primaire est interrompu, et en ce que les données venant de l'élément de connexion côté secondaire sont transmises de façon active.

14. Module capteur (1) selon l'une des revendications précédentes, pour lequel l'élément de connexion côté secondaire contient dans sa mémoire des données spécifiques au capteur.
